# FASCICULE DE BREVET EUROPEEN

(11) **EP 2 760 771 B1**
(45) Date de publication et mention de la délivrance du brevet: **06.01.2016**
(21) Numéro de dépôt: 12766106.4
(22) Date de dépôt: 28.09.2012
(51) Int. Cl.: B65G 69/18, F16L 37/30, B01L 1/02, G21F 7/005

(54) **MECANISME DE COMMANDE D'UN DISPOSITIF DE CONNEXION ETANCHE ENTRE DEUX VOLUMES CLOS A MANIPULATION SIMPLIFIEE**
MECHANISMUS MIT VEREINFACHTER HANDHABUNG ZUR STEUERUNG EINER VORRICHTUNG ZUR DICHTEN VERBINDUNG VON ZWEI EINGESCHLOSSENEN RÄUMEN
MECHANISM WITH SIMPLIFIED HANDLING FOR CONTROLLING A DEVICE FOR SEALINGLY CONNECTING TWO ENCLOSED SPACES

(30) Priorité: 30.09.2011 FR 1158838
(43) Date de publication de la demande: 06.08.2014
(73) Titulaire: Getinge La Calhene, 41100 Vendôme (FR)
(72) Inventeur: SIMON, Jean-Pierre, F-41100 Vendome (FR); CHAVROT, Bernard, F-37270 Athee Sur Cher (FR); DUFOUR, Christophe, F-41310 Saint Amand Longpre (FR)
(74) Mandataire: Ahner, Philippe
(86) Numéro de dépôt international: PCT/EP2012/069271
(87) Numéro de publication internationale: WO 2013/045667

(56) Documents cités:
- EP-A1- 0 662 373
- WO-A1-03/057431
- DE-A1-102006 013 157
- US-A- 5 884 660

## Description

### DOMAINE TECHNIQUE ET ART ANTÉRIEUR

La présente invention se rapporte à un mécanisme de commande d'un dispositif de connexion étanche entre deux volumes clos à manipulation simplifiée, et à un dispositif de connexion étanche entre deux volumes clos comportant au moins un tel mécanisme.

Dans un certain nombre de secteurs industriels, parmi lesquels on citera les secteurs nucléaire, médical, pharmaceutique et agroalimentaire, il est nécessaire ou souhaitable d'effectuer certaines tâches dans une atmosphère confinée, soit afin de protéger le personnel, par exemple de la radioactivité, de la toxicité..., soit au contraire de pouvoir effectuer ces tâches dans une atmosphère aseptique ou exempte de poussière, soit enfin les deux simultanément.

Le transfert d'appareil ou de produit d'un volume clos à l'autre, sans qu'à aucun moment l'étanchéité de chacun de ces volumes vis-à-vis de l'extérieur ne soit rompue, pose un problème délicat à remplir. Ce problème peut être résolu par un dispositif de connexion à double porte.

Un tel dispositif à double porte est par exemple connu du document FR 2 695 343. Chaque volume est clos par une porte montée dans une bride. Chaque porte est solidarisée à sa bride par une liaison baïonnette et les deux brides sont destinées à être solidarisés l'une à l'autre par une liaison baïonnette.

Dans le cas où l'un des volumes clos est formé par un conteneur et l'autre volume par une boîte à gants, le transfert s'effectue de la manière suivante. La bride du conteneur comporte sur sa périphérie extérieure des oreilles destinées à coopérer avec une empreinte de la bride de la boîte à gant. La bride du conteneur est introduite dans la bride de la boîte à gant, le conteneur est orienté de sorte à faire correspondre les oreilles avec l'empreinte. Une première rotation du conteneur suivant l'axe de sa porte permet de solidariser la bride du conteneur à la bride de la boîte à gant par la liaison baïonnette. Au moyen d'une deuxième rotation du conteneur, suivant le même axe et en continuité avec la première rotation, la porte du conteneur est pivotée par rapport au conteneur, assurant à la fois une solidarisation par une autre liaison baïonnette avec la porte du conteneur et une désolidarisation du nouvel ensemble formé par les deux portes accolées vis-à-vis des brides de porte et de boîte à gant. Une commande à poignée située dans la boîte à gant permet de déverrouiller un mécanisme de sécurité et de libérer le passage entre les deux volumes. Dans le cas d'une atmosphère aseptique, les faces extérieures des deux portes étant en contact l'une avec l'autre de manière étanche, elles ne peuvent contaminer l'intérieur des volumes.

Ce dispositif donne entière satisfaction dans le cas du transfert de produits solides, avec des poids en jeu limités. Cependant il nécessite la rotation du conteneur afin de faire correspondre les deux brides et ensuite de les solidariser. Dans le cas de conteneur de grande taille, la manipulation du dispositif en rotation peut devenir laborieuse. Dans le cas où le dispositif de connexion est vertical, il n'est pas toujours aisé de faire pivoter le conteneur. Par ailleurs, si le produit à transférer est une poudre, la présence d'oreilles pour la connexion peut rendre le nettoyage plus difficile. En outre, le document WO 03 057431 A1 divulgue un dispositif selon le préambule de la revendication 1.

### EXPOSÉ DE L'INVENTION

C'est par conséquent un but de la présente invention d'offrir un mécanisme de commande pour dispositif de connexion étanche entre deux volumes clos, par exemple en un contenue et une enceinte permettant une connexion plus aisée des deux volumes, sans rotation des deux volumes.

C'est également un but supplémentaire de la présente invention d'offrir un passage de forme simplifiée entre les deux volumes permettant un nettoyage facilité.

Le but précédemment énoncé est atteint par un mécanisme de commande d'un dispositif de connexion disposé dans un des volumes, destiné à accoster la porte de l'autre volume et assurant lors de son activation la connexion des deux portes de manière étanche et ensuite leur déverrouillage vis-à-vis des brides afin de former une passage étanche entre les deux volumes.

En d'autres termes, le mécanisme de commande nécessite uniquement une mise en contact des deux brides, celui-ci comportant une tête d'accostage disposée dans l'un des volumes, accostant de manière automatique la porte de l'autre volume quelle que soit son orientation, se solidarisant à celle-ci et la déverrouillant.

Le mécanisme selon l'invention présente l'avantage de ne nécessiter aucune orientation angulaire des deux volumes l'un par rapport à l'autre, ce qui simplifie la manoeuvre. En outre il permet une automatisation de la manoeuvre puisque les mouvements de rotation sont concentrés sur l'une des portes.

Plusieurs mode de réalisation sont possibles suivant le nombre d'oreilles choisi, qui est au moins deux. Dans ce cas, en fonction du positionnement angulaire de la tête d'accostage au moment de la mise en contact des deux volumes, une rotation pouvant aller jusqu'à 180° est requise afin d'obtenir l'alignement des oreilles. Si un nombre d'oreilles plus grand est choisi, l'angle de rotation maximal est réduit proportionnellement. Ainsi, pour quatre oreilles, l'angle de rotation nécessaire pour trouver l'alignement des oreilles n'est au plus que de 90°. Les frottements sont alors réduits. La mise en oeuvre d'un plus grand nombre d'oreille a également pour avantage d'assurer une meilleure tenue mécanique et une meilleure répartition des efforts lorsque les deux portes sont en prise.

De manière avantageuse le mécanisme d'accostage est entraîné par un moteur électrique, permettant une automatisation de la mise en connexion étanche.

La présente invention a alors pour objet un mécanisme de commande d'un dispositif de connexion étanche entre un premier et un deuxième volume clos, le premier volume comportant une première bride délimitant une première ouverture et une première porte obturant ladite première ouverture, le deuxième volume comportant une deuxième bride délimitant une deuxième ouverture et une deuxième porte obturant ladite deuxième ouverture, la deuxième porte étant solidarisée à la deuxième bride par une liaison baïonnette, la première porte comportant un pièce annulaire assurant le contact étanche avec le première bride et avec la deuxième porte et une enveloppe, l'enveloppe et la pièce annulaire délimitant avec le deuxième porte un espace étanche, ledit mécanisme de commande étant monté dans la pièce annulaire, ledit mécanisme de commande comportant un élément mâle destiné à coopérer avec un élément femelle portée par la deuxième porte par une liaison baïonnette, ledit mécanisme de commande comportant des moyens d'entraînement en rotation dudit élément mâle, ledit élément mâle étant mobile en translation le long de l'axe longitudinal et en rotation autour de l'axe longitudinal de sorte à permettre la connexion entre les deux volumes selon au moins les phases suivantes :
- une première phase de rotation de recherche de la position d'accostage de l'élément mâle sur l'élément femelle,
- une deuxième phase de translation lors de laquelle l'élément mâle accoste l'élément femelle,
- une troisième phase de rotation pour assurer le verrouillage axial des deux portes,
- une quatrième phase de rotation pour assurer le déverrouillage de la deuxième porte par rapport à la deuxième bride.

Selon une caractéristique additionnelle, l'élément mâle comporte une partie de verrouillage axial et une partie de commande, lesdites parties étant mobiles en rotation l'une par rapport à l'autre autour de l'axe longitudinal, la partie de verrouillage axial étant destinée au verrouillage axial de la première porte et de la deuxième porte et la partie de commande étant destinée au verrouillage ou déverrouillage du deuxième couvercle.

Par exemple, la partie de verrouillage axial peut comporter un étrier perpendiculaire à l'axe longitudinal et connecté aux moyens d'entrainement en rotation autour de l'axe longitudinal, ledit étrier étant destiné à coopérer avec l'empreinte de la deuxième porte pour assurer le verrouillage axial des première et deuxième portes, et dans lequel la partie de commande comporte un premier plateau et un deuxième plateau sensiblement circulaires munis d'oreilles, lesdits plateaux étant parallèles et espacés l'un de l'autre le long de l'axe longitudinal d'une distance fixe se sorte à ménager un espace dans lequel est disposé apte à pivoter l'étrier, lesdites oreilles étant destinées à coopérer avec des découpes de l'empreinte de sorte qu'une rotation de la partie de commande entraine en rotation la deuxième porte, le premier plateau et le deuxième plateau étant connectés aux moyens d'entraînement en rotation.

Dans un exemple avantageux, les moyens d'entraînement en rotation sont en prise avec un arbre d'entraînement solidaire de l'étrier, lesdits premier et deuxième plateaux étant fixés sur un arbre creux traversé par l'arbre d'entraînement de la partie de verrouillage, et dans lequel le mécanisme de commande comporte des moyens de solidarisation en rotation escamotables reliant l'étrier et les premier et deuxième plateaux de sorte que, lors de la première phase, les premier et deuxième plateaux et l'étrier soient solidaires en rotation, lors de la troisième phase, l'étrier pivote et les premier et deuxième plateaux soient immobiles et, lors de la quatrième phase, les premier et deuxième plateaux et l'étrier soient solidaires en rotation.

L'arbre d'entraînement solidaire l'étrier est de préférence est mobile en translation le long de l'axe longitudinal et dans lequel des deuxièmes moyens élastiques sont montés en compression entre le premier plateau et une partie fixe du mécanisme de commande de sorte à repousser le premier plateau et l'étrier en direction de la deuxième porte.

Les moyens de solidarisation en rotation comportent par exemple au moins un pion présentant une portion de plus petit diamètre et une portion de plus grand diamètre, monté coulissant à travers les premier et deuxième plateaux et l'étrier, le premier plateau présentant un orifice de diamètre apte à recevoir la portion de plus grand diamètre et le deuxième plateau présentant un orifice de diamètre apte à recevoir la portion de plus petit diamètre et inférieur à celui de la portion de plus grand diamètre, et l'étrier comportant une lumière en forme d'arc de cercle centrée sur l'axe longitudinal, la largeur de la lumière étant apte à recevoir la portion de plus petit diamètre du pion et étant inférieure au diamètre de la portion de plus grand diamètre, la lumière comportant une extrémité de plus grande largeur apte à recevoir la portion de plus grand diamètre, et un moyen élastique appliquant un effort sur le pion en direction de la deuxième porte, dans un état de solidarisation le pion traverse les deux orifices des premier et deuxième plateaux et l'extrémité de plus grande largeur de la lumière l'étrier.

Le mécanisme de commande peut avantageusement comporter des moyens de détection d'une position de l'élément mâle en dehors de l'empreinte de la deuxième porte et une position dans l'empreinte de la deuxième porte.

De préférence, la rotation lors de la première phase a un sens opposé à la rotation dans la troisième phase.

Dans un exemple de réalisation, anis les moyens d'entraînement sont formés par un moteur électrique. Dans un autre exemple, les moyens d'entraînement sont formés par un levier à actionnement manuel.

La présente invention a également pour objet un dispositif de connexion étanche entre deux volumes clos, comportant sur le premier volume une première bride délimitant une première ouverture et une première porte obturant ladite première ouverture, sur le deuxième volume comportant une deuxième bride délimitant une deuxième ouverture et une deuxième porte obturant ladite deuxième ouverture, la deuxième porte étant solidarisée à la deuxième bride par une liaison baïonnette et un mécanisme de commande selon l'invention, la première porte comportant un pièce annulaire assurant le contact étanche avec le première bride et avec la deuxième porte et une enveloppe, l'enveloppe et la pièce annulaire délimitant avec le deuxième porte un espace étanche, ledit mécanisme de commande étant monté dans la pièce annulaire.

Le dispositif peut également comporter des moyens pour appliquer un effort axial sur la première porte en direction de la première bride. Le dispositif peut également comporter des moyens pour appliquer un effort axial sur la deuxième bride en direction de la première bride.

Dans un exemple de réalisation, la première porte est articulée sur une paroi du premier volume au moyen d'une charnière

La présente invention a également pour objet un système de transfert de poudre comportant un dispositif de connexion selon la présente invention, dans lequel le premier volume est une enceinte comportant une paroi supérieure traversée de manière étanche par une trémie d'alimentation en matériau en poudre, une paroi inférieure munie de la première bride et de la première porte en position fermée, le deuxième volume étant formée par un conteneur à remplir, muni de la deuxième bride et de la deuxième porte en position fermée, et des moyens pour amener en contact par déplacement le long de l'axe longitudinal les première et deuxième brides et des moyens pour immobiliser axialement la deuxième bride par rapport à la première bride, et une portion de trémie amovible disposée dans la cellule et apte à raccorder un extrémité de la trémie débouchant dans la cellule et l'ouverture du conteneur.

Le déplacement de la portion de trémie amovible est avantageusement obtenu par actionnement d'un moteur électrique. Le déplacement des deux portes solidarisées l'une à l'autre peut également être avantageusement obtenu par actionnement d'un moteur électrique.

La présente invention a également pour objet un procédé de connexion étanche entre un premier et un deuxième volume clos au moyen d'un mécanisme de commande selon la présente invention comportant les étapes :
a) mise en contact de la première et de la deuxième bride
b) mise en rotation de l'élément mâle jusqu'à ce qu'il pénètre par translation dans l'empreinte de la deuxième porte,
c) mise en rotation de l'élément mâle de sorte à verrouiller axialement la première et la deuxième porte,
d) mise en rotation de l'élément mâle de sorte à déverrouiller la deuxième porte de la deuxième bride,
e) retrait de l'ensemble formé par les première et deuxième portes.

De préférence, l'étape b) a lieu lorsque l'étape a) est vérifiée l'étape c) a lieu lorsque l'étape b) est vérifiée, et l'étape d) a lieu lorsque l'étape c) est vérifiée.

Les sens de rotation de l'étape b) est avantageusement opposé à celui de l'étape d).

### BRÈVE DESCRIPTION DES DESSINS

La présente invention sera mieux comprise à l'aide de la description qui va suivre et des dessins en annexe sur lesquels :
- la figure 1 est une vue en coupe longitudinale selon deux plans sécants d'un exemple de réalisation d'un mécanisme de commande selon la présente invention,
- la figure 2 est une vue en coupe longitudinale selon un plan du mécanisme de commande de la figure 1A selon un autre,
- les figures 3A à 3F sont des vues de dessus du conteneur avec une partie du mécanisme de commande suivant différentes étapes de mise en communication des deux volumes clos, dans un mode de réalisation à deux oreilles,

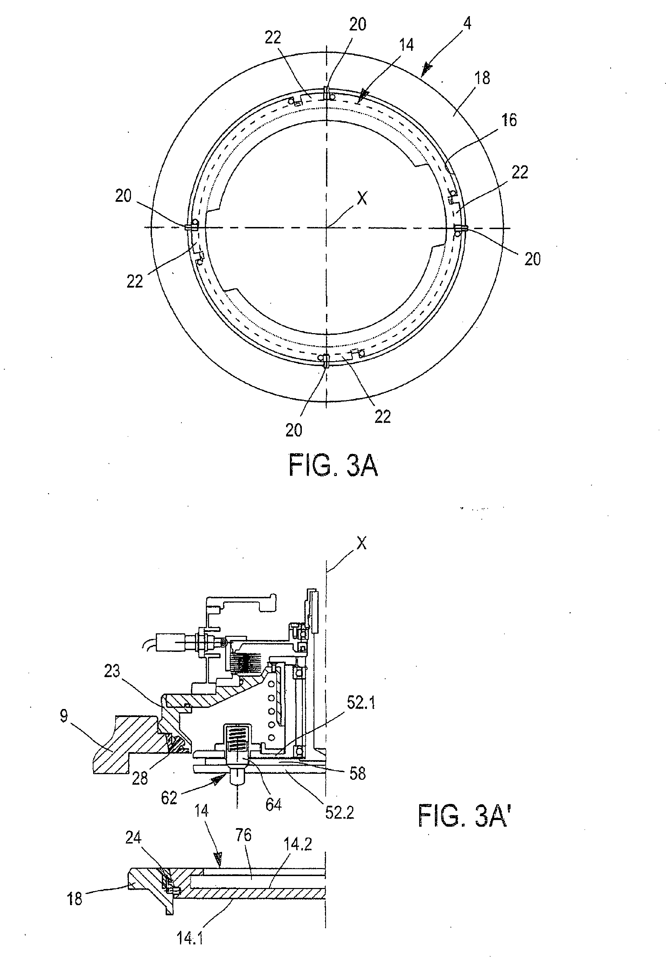

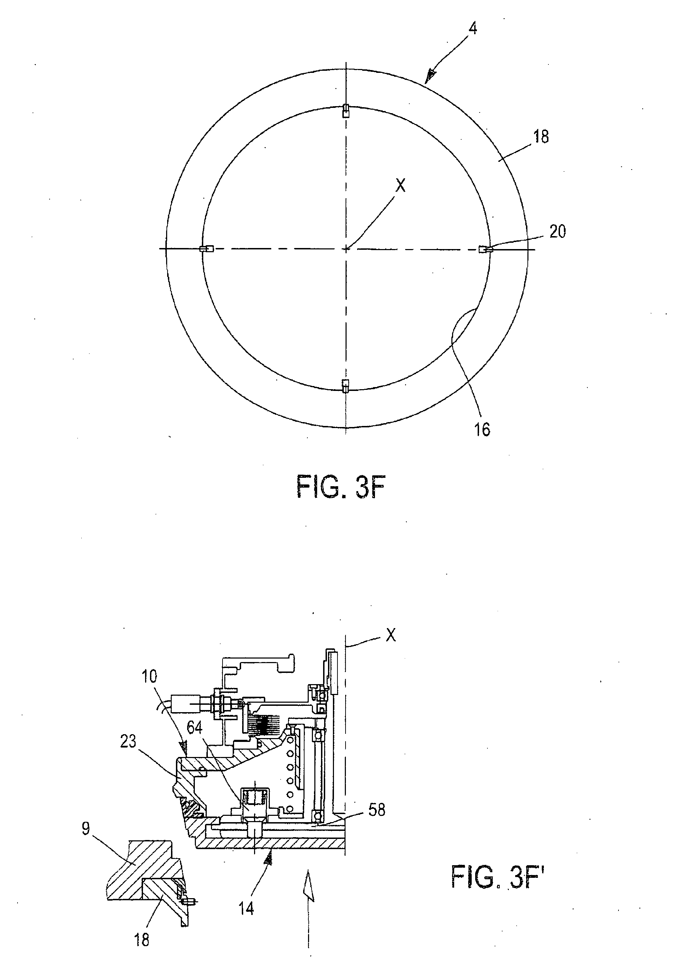

- les figures 3A' à 3F' sont des demi-vues en coupe longitudinal du dispositif de connexion suivant mes différentes étapes des figures 3A à 3F respectivement,

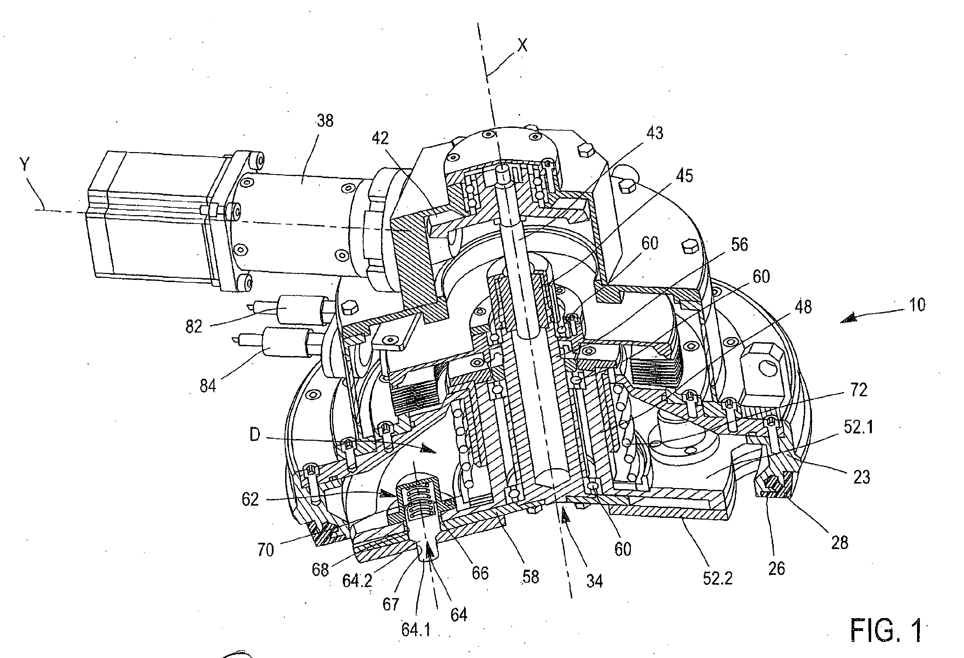

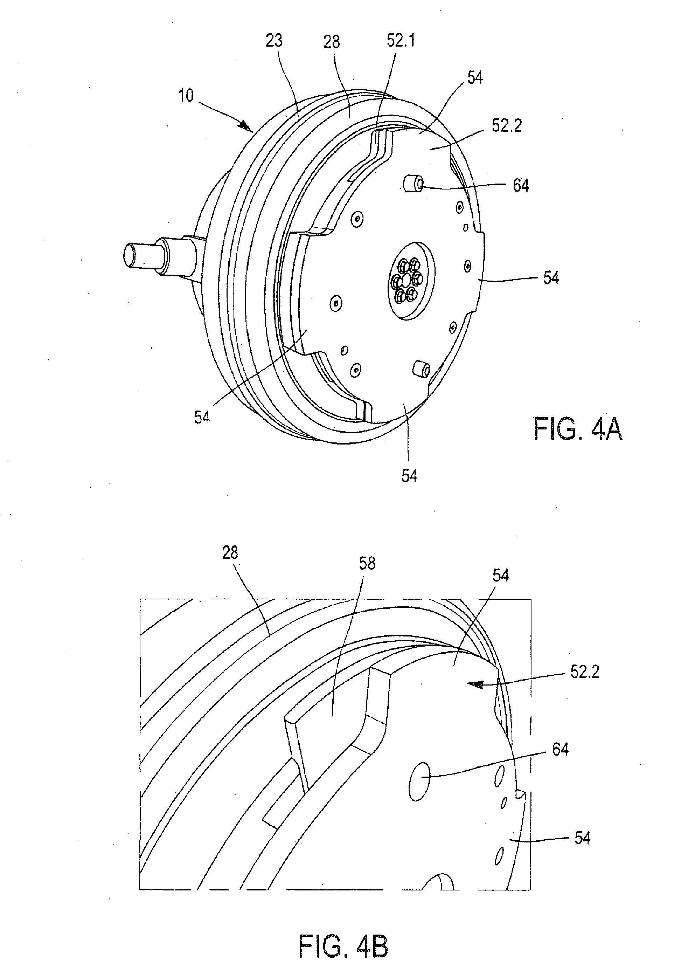

- les figures 4A et 4B sont des vues de dessous du mécanisme de commande de la figure 1 et de la porte contenant le mécanisme, dans un mode de réalisation à 4 oreilles,

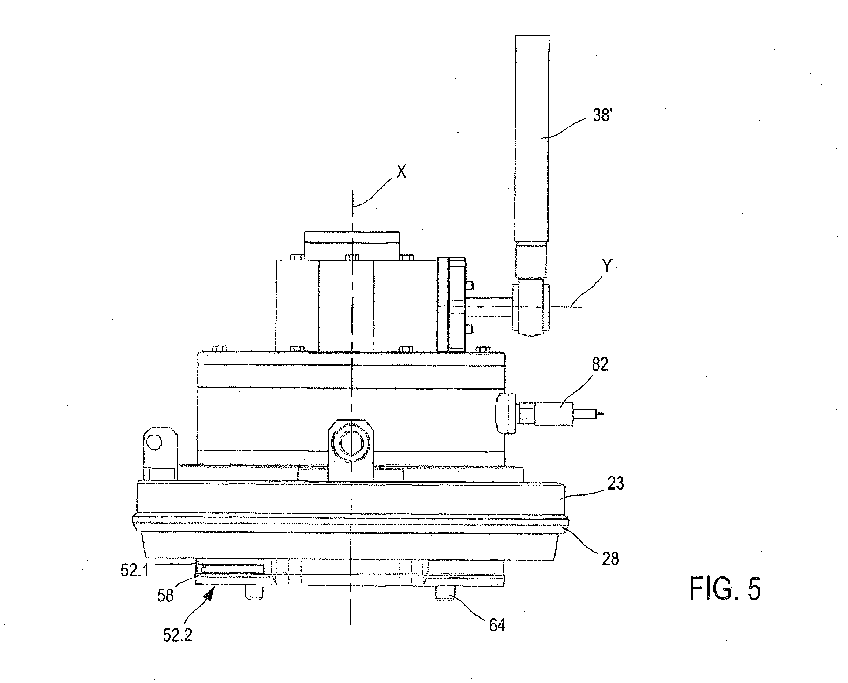

- la figure 5 est une vue de côté d'une variante de réalisation du dispositif de la figure 1,

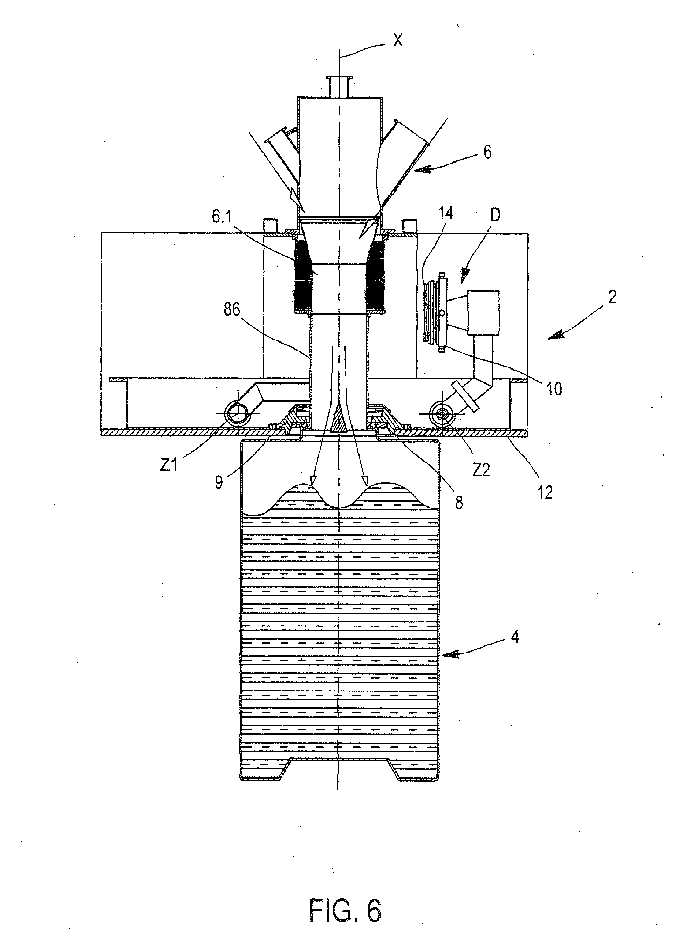

- la figure 6 est une représentation schématique d'une installation de transfert de poudre mettant en oeuvre le dispositif de connexion selon l'invention.

### EXPOSÉ DÉTAILLÉ DE MODES DE RÉALISATION PARTICULIERS

Dans la description qui va suivre, nous considérerons un premier volume clos formé par une enceinte 2 et un deuxième volume clos formé par un conteneur 4. L'enceinte peut être formée par une boîte à gants ou par une cellule.

Les termes "boîte à gants", "cellules", "enceinte" et "conteneur" utilisés pour designer les deux volumes clos ne sont pas limitatifs, l'invention s'appliquant à la mise en communication de deux volumes en général, quels que soient ces deux volumes. Par exemple, l'invention peut permettre la connexion entre deux boîtes à gants, ou entre deux cellules.

Sur la figure 6, on peut voir une installation de transfert de poudre à laquelle est appliqué le mécanisme de commande selon l'invention.

L'installation comporte une enceinte 2 située au dessous d'une trémie 6 qui traverse de manière étanche une paroi supérieure de l'enceinte 2 et une ouverture 8 dans une paroi inférieure 12.

L'ouverture 8 est bordée par une bride 9 et est obturée par une porte 10. Un mécanisme de commande D selon l'invention est prévu dans l'enceinte 2.

Un conteneur 4 est situé sous l'enceinte 2 et est muni d'une porte 14.

Sur la figure 3A, on peut voir vue de dessus le conteneur 4 et en particulier la porte 14. Le conteneur comporte une ouverture 16 délimitée par une bride 18 qui reçoit la porte 14, celle-ci fermant l'ouverture 16 de manière étanche.

Le dispositif de connexion est formé par la porte 10 et la bride 9 de l'enceinte et la porte 14 et la bride 18 du conteneur (figure 3A').

La porte 14 est solidarisée à la bride 18 par une liaison baïonnette. Dans l'exemple représenté, la bride 18 comporte quatre doigts 20 s'étendant radialement vers l'intérieur de la bride 18 et réparties angulairement de manière régulière et la porte 14 comporte sur son bord périphérique des gorges 22 associées à chaque pion et recevant ceux-ci dans un état verrouillé. Alternativement, on peut envisager que les doigts 20 soient portés par la porte 14 et les gorges 22 soient réalisées dans la bride 18 de conteneur 18. Ceci a pour effet de dégager entièrement le passage, ce qui est particulièrement avantageux dans le cas de transfert de poudre ou d'autres éléments pouvant être retenus pas les doigts en saillie.

La porte 14 comporte une face intérieure 14.1 destinée à être située à l'intérieur du conteneur et une face extérieure 14.2 destinée à être située à l'extérieur du conteneur (figure 3A').

La mise en oeuvre de doigts 20 présente l'avantage d'offrir une surface très faible de rétention à la poudre qui provient de la trémie.

Une bride de conteneur munie d'oreilles pénétrant dans des gorges ne sort pas du cadre de la présente invention.

Un joint 24 est prévu entre le bord de la bride 18 et le bord périphérique de la porte 14 du conteneur.

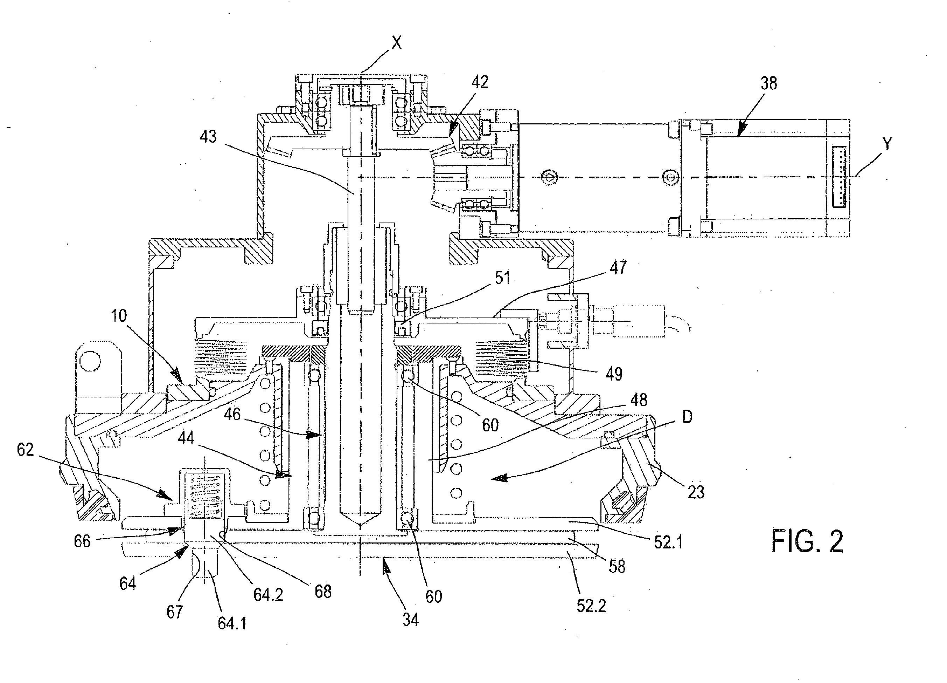

Sur les figures 1 et 2, on peut voir en détail le mécanisme de commande D représenté seul. Le mécanisme de commande D est logé dans la porte 10 de l'enceinte. La porte 10 est formée d'un corps qui, dans l'exemple représenté, a sensiblement la forme d'un chapeau dans lequel est logé le mécanisme de commande D. L'enveloppe comporte une pièce annulaire 23 munie d'une portée annulaire 26 destinée à venir en contact avec la bride 18 et la porte 14 du conteneur. La pièce annulaire 23 est, en position fermée, logée dans la bride 9, comme cela est illustré sur la figure 3A'. La périphérie latérale de la bride 9 et la face latérale de la pièce annulaire 23 sont telles que la porte 10 repose dans la bride 9. Un joint d'étanchéité 28 forme l'extrémité radialement extérieure de la portée annulaire 26 et le bord inférieur de la périphérie latérale de la pièce annulaire 23. Le joint d'étanchéité 28 vient ainsi en contact avec un bord de la face extérieure 14.2 de la porte 14 du conteneur et avec la périphérie latérale de la bride 9. Ce joint 28 forme donc à la fois l'étanchéité entre la paroi inférieure de la cellule et la porte 10 et entre les deux portes 10 et 14.

Des moyens d'étanchéité qui seront décrits ultérieurement délimitent avec la pièce annulaire 23 un espace étanche par rapport à l'intérieur de l'enceinte.

Des moyens non représentés sont prévus pour maintenir la porte 10 plaquée contre la bride 9 en exerçant un effort axial sur la porte en direction de la bride 9. Ces efforts sont annulés pour retirer la porte 10. Par exemple ces moyens peuvent être formés par un vérin.

La porte 10 est de préférence articulée autour d'un axe horizontal par une charnière.

Avantageusement un moteur électrique est prévu pour automatiser le retrait des portes 10 et 14.

L'ouverture automatisée est dans cet exemple de réalisation particulièrement intéressant car il faut soulever les deux portes, ce qui peut requérir une certaine force physique. Dans le cas d'un dispositif de connexion vertical, le poids des deux portes est repris par la charnière, une ouverture manuelle est plus facile.

Le dispositif de connexion comporte un axe longitudinal X autour duquel sont aptes à pivoter les portes 10 et 14. L'axe longitudinal X forme l'axe de rotation du mécanisme de commande (figure 2).

Le mécanisme de commande D assure la manipulation de la porte 14. Le dispositif D comporte un élément mâle 34 destiné à coopérer avec un l'empreinte formée dans la face extérieure de la porte 14, qui sera décrit ultérieurement.

L'élément mâle 34 est monté mobile en rotation autour de l'axe longitudinal X et en translation le long de l'axe longitudinal X. l'élément mâle est mobil en rotation et en translation par rapport à la pièce annulaire 23. Des moyens d'entraînement en rotation 38 sont prévus. Dans l'exemple représenté sur la figure 1, il s'agit d'un moteur électrique. Dans l'exemple représenté, l'axe Y du moteur électrique est perpendiculaire à l'axe de rotation de l'élément mâle afin de limiter l'encombrement, un renvoi d'angle 42 est prévu entre l'axe du moteur et un arbre 43 en prise avec l'élément mâle. De manière très avantageuse, le moteur est un moteur pas à pas muni d'une référence, ainsi il est possible de connaître à tout moment à quel stade de la connexion le mécanisme se trouve.

L'élément mâle 34 comporte une partie extérieure 44 destinée à entrainer en rotation la porte 14 du conteneur et sera désignée par la suite « partie de commande » et une partie intérieure 46 destinée à solidariser axialement la porte 10 à la porte 14 et sera désignée par la suite « partie de verrouillage axial ».

La partie de commande 44 comporte un arbre creux 48 et deux plateaux 52.1, 52.2 perpendiculaires à l'arbre 48 et fixés rigidement à celui-ci. Les plateaux 52.1, 52.2 munis d'oreilles s'étendant radialement vers l'extérieur. Les oreilles 54 sont au nombre de quatre, dans l'exemple représenté, et disposées à angle droit les unes des autres. Ces oreilles sont destinées à pénétrer dans une empreinte formée dans la face extérieure de la porte 14.

La partie de verrouillage axial 46 comporte un arbre creux 56 logé à l'intérieur de l'arbre creux 48 de la partie de commande 44 et en prise avec l'arbre 43 du moteur. La partie de verrouillage axial 46 comporte également un étrier 58 perpendiculaire à l'arbre 56 et monté entre les deux plateaux de la partie de commande 44. La partie de verrouillage axial 46 est montée apte à coulisser autour de l'arbre 43 le long de l'axe longitudinal. Le couplage en rotation entre l'arbre 43 et l'arbre 48 est par exemple de type par cannelure, l'arbre 43 étant muni des cannelures axiales et le l'arbre 48 contenant sur sa périphérie interne des nervures axiales coopérant avec les cannelures.

L'arbre creux 56 est monté dans l'arbre creux 43 au moyen de roulements billes 60.

La partie de verrouillage axial 46 est apte à pivoter par rapport à la partie de commande 44. Un manchon 45 formant un coussinet est prévu entre l'arbre 48 de la partie de commande 44 et l'enveloppe pour réduire les frottements.

Sur les figures 4A et 4B, on peut voir une variante du mécanisme de commande des figures 1 et 2 vu de dessous comportant quatre oreilles 54, dans ce cas l'étrier peut avoir la forme sensiblement d'une croix.

Sur la figure 4A, l'étrier ne sort pas d'entre les plateaux 52.1, 52.2, et sur la figure 4B, on peut voir l'étrier pivoté par rapport aux plateaux 52.1, 52.2 et sortant d'entre les plateaux.

Une étanchéité est réalisée autour de la partie mâle 34. Dans l'exemple représenté, celle-ci est formé par un flasque 47 traversé par l'arbre 56 et un soufflet 49 monté à l'extrémité radial du flasque et se fixant sur l'enveloppe et un joint d'étanchéité 51 entre l'orifice du flasque 47 et l'arbre 56. Le coulissement la partie mâle 34 est accommodé par le soufflet 49.

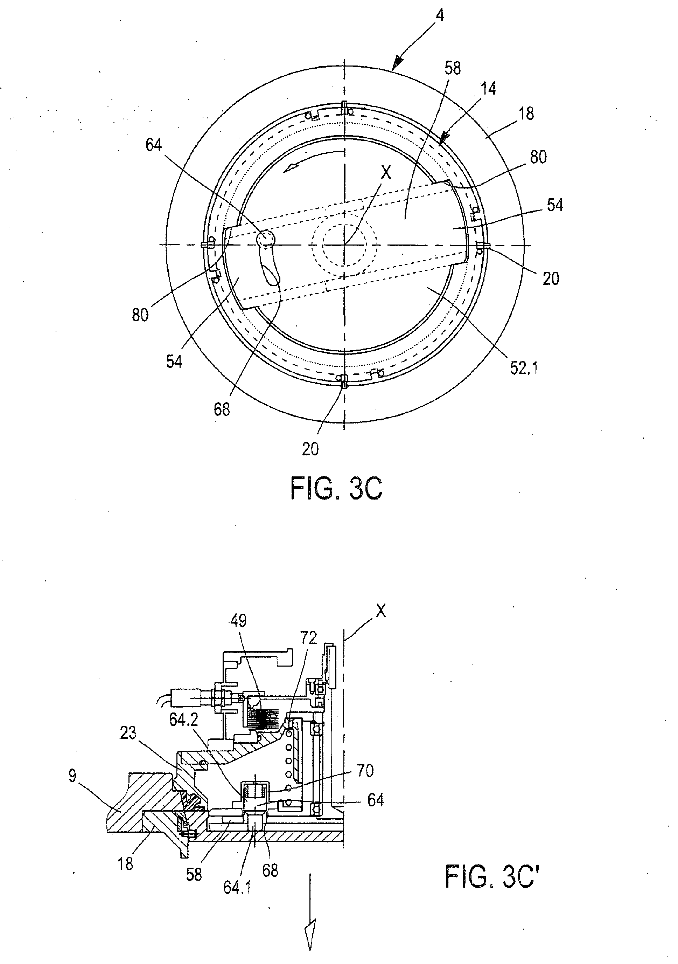

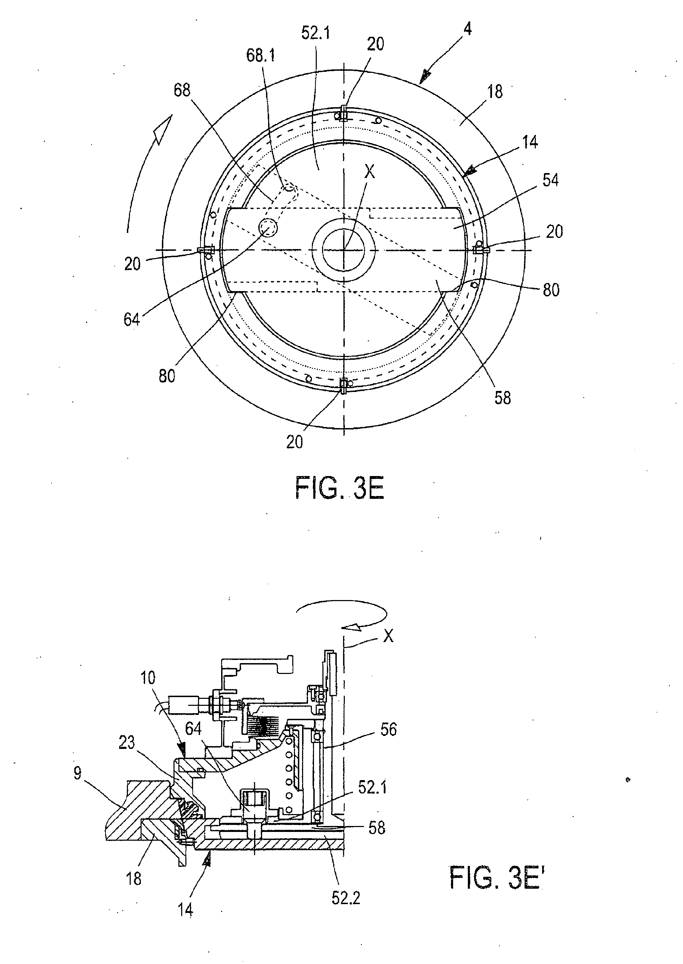

Un moyen de solidarisation escamotable 62 est prévu entre la partie de commande 44 et la partie de verrouillage axial 46. Celui-ci comporte un pion 64 présentant une portion de plus petit diamètre 64.1 et une portion de plus grand diamètre 64.2, un premier perçage 66 dans le plateau supérieur 52.1 de diamètre légèrement supérieur à celui de la portion de plus grand diamètre 64.2, un deuxième perçage 67 dans le plateau inférieure 52.2 de diamètre légèrement supérieur à celui de la portion de plus petit diamètre 64.1, mais inférieur à celui de la portion de plus grand diamètre 64.2, les premier 66 et deuxième 67 perçages étant coaxiaux, une lumière 68 en forme d'arc de cercle centré sur l'axe longitudinal X formé dans l'étrier. La lumière 68 présente une largeur légèrement supérieure au diamètre de la portion de plus petit diamètre 64.1 et inférieur au diamètre de la portion de plus grand diamètre 64.2. Une 68.1 des extrémités de la lumière 68 présente un diamètre légèrement supérieur à celle de a portion de plus grand diamètre 64.2, comme cela est visible sur les figure 3C et 3E.

Des premiers moyens de rappel élastique 70 sont prévus sur le plateau supérieur 52.1 pour rappeler le pion 64 vers l'extérieur de la porte 10. Les moyens élastiques 70 sont formés, dans l'exemple représenté, par un ressort hélicoïdal monté en compression entre une cage 71 et le pion 64.

En l'absence de porte 14, le pion 64 est en position enfoncée, sa partie de plus grand diamètre 64.2 est logée dans l'extrémité de la lumière 66 et la portion de plus petit diamètre 64.1 pénètre le perçage 67 du plateau inférieur 52.2. L'étrier et les deux plateaux 52.1, 52.2 sont solidaires en rotation, plus généralement la partie de verrouillage axial 46 entraîne en rotation la partie de commande 44.

Lorsqu'un conteneur est disposé sous la porte 10, le pion 64 est repoussé vers le haut à l'encontre des premiers moyens élastiques 70, c'est alors la portion de plus petit diamètre 64.1 qui traverse la lumière 68, le pion 64 peut alors coulisser dans la partie de la lumière dont la largeur est légèrement supérieur au diamètre de la portion de plus petit diamètre 64.1. L'étrier 58 peut alors pivoter par rapport aux deux plateaux 52.1, 52.2.

Des deuxièmes moyens de rappel élastique 72 sont montés en réaction entre le plateau supérieur 52.1 et une partie fixe 74 de la porte 10.

L'élément femelle est porté par la face extérieure de la porte 10. La face extérieure comporte une empreinte 76 de forme générale circulaire munie de quatre découpes 78 dans sa périphérie latérale de forme correspondante aux quatre oreilles des plateaux 52.1, 52.2 de sorte à former pour elles un logement. Une gorge périphérique 80 est prévue dans le bord latéral de l'empreinte 76 pour recevoir l'étrier 58. La profondeur de l'empreinte 76 est sensiblement égale à l'épaisseur des deux plateaux 52.1, 52.2 et l'étrier.

Avantageusement des moyens d'immobilisation axiale entre le conteneur et l'enceinte sont prévus (non représentés). Ils sont de préférence formés par des moyens reliant rigidement la bride 9 de l'enceinte et la bride 18 du conteneur. Ces moyens d'immobilisation axiale peuvent être formés par une bague montée sur la bride de l'enceinte et comportant deux rainures hélicoïdales et par une partie mobile en rotation autour du conteneur 4, cette partie mobile comportant deux ergots diamétralement opposés destinés à pénétrer et à coulisser dans les rainures hélicoïdales. La rotation de la partie mobile provoque le plaquage de la bride de conteneur contre la bride de l'enceinte. Alternativement, le conteneur peut être disposé sur un plateau élévateur, lorsque le plateau se soulève, il provoque le plaquage de la bride de conteneur contre la bride de l'enceinte. Dans le cas d'une connexion horizontale, le conteneur est disposé sur un chariot qui se déplace horizontalement par rapport à la cellule, le chariot assurant le plaquage

Avantageusement, des moyens de détection sont prévus pour détecter la présence du conteneur. Par exemple, un capteur 82 détecte la position haute de l'élément mâle 34, ce qui indique qu'un conteneur est accosté. Un capteur 84 est avantageusement prévu pour détecter la position basse de l'élément mâle 34. Cette détection indique que la partie mâle 34 est en position dans l'empreinte 76 de la porte 14 et que l'étape de verrouillage axial peut débuter. Les capteurs 82 et 84 peuvent être formés simplement d'une pièce mobile fermant ou ouvrant un contact électrique.

Nous allons maintenant expliquer le fonctionnement de ce mécanisme de commande à l'aide des schémas des figures 3A à 3F et 3A' à 3F'.

Initialement la porte 14 est verrouillée sur la bride 18 du conteneur et la porte 10 est verrouillée sur la bride 9 de l'enceinte.

Lors d'une première étape, la bride 18 du conteneur est disposée en dessous et en regard de la bride 9 de l'enceinte (figure 3A'). La mise en place du conteneur ne nécessite aucune orientation angulaire de celui-ci par rapport à la porte 10 et à la bride 9 de l'enceinte.

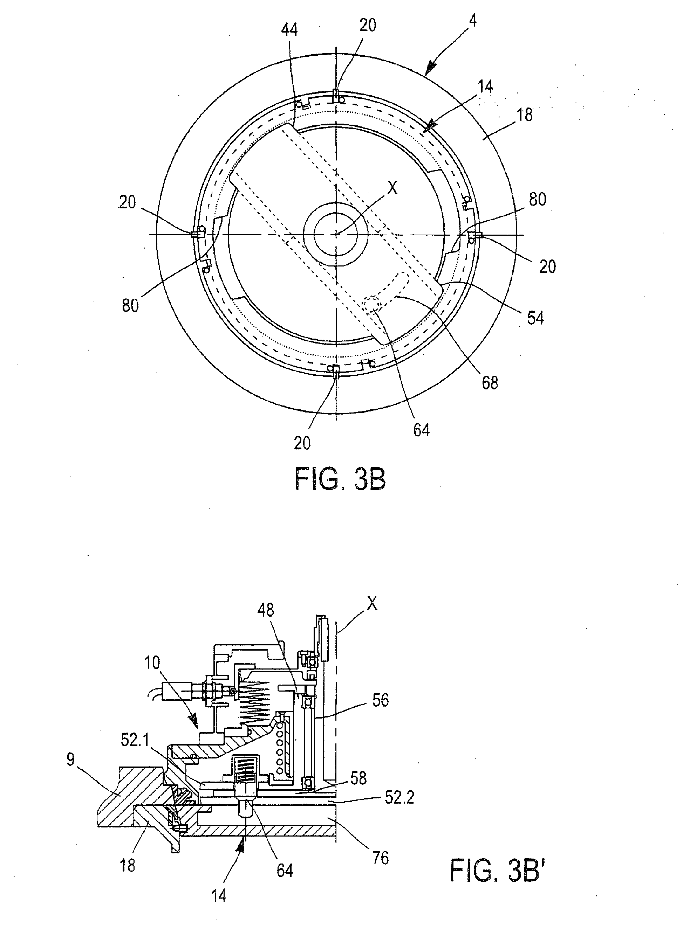

Ensuite les deux brides 10, 18 sont rapprochées jusqu'à être mises en contact. Par exemple en élevant le conteneur ou en abaissant la cellule (figure 3B et 3B'). Dans cette position, si les oreilles des plateaux 52.1, 52.2 sont alignées avec les découpes 80 de la porte 14, les plateaux 52.1, 52.2 se logent directement dans l'empreinte 76. Si les oreilles sont décalées angulairement par rapport aux découpes 80 de l'empreinte, elles viennent en appui avec le bord supérieur de la porte 14, comprimant les deuxièmes moyens élastiques. La partie mâle 34 coulisse vers le haut autour de l'arbre 43. Dans cette position les pions 66 sont en position enfoncée la partie de commande 44 et la partie de verrouillage axial 46 sont solidaires en rotation.

Le capteur 82 détecte la position haute de l'élément mâle 34. Le moteur peut alors être actionné, ce qui provoque via le renvoi d'angle la rotation de l'arbre 43 dans le sens horaire, qui entraîne l'arbre 56 de la partie de verrouillage axial 46, qui, elle-même entraîne la partie de commande 44 via les pions 66. Les plateaux 52.1, 52.2 et donc les oreilles tournent autour de l'axe longitudinal X. Lors de la rotation, les oreilles se trouvent alignés avec les découpes 80, les oreilles sous l'action des deuxièmes moyens élastiques sont poussées vers le fond de l'empreinte 76 et viennent en appui contre celui-ci. (Figure 3C et figure 3C').

Simultanément les pions 66 sont repoussés vers le haut désolidarisant la partie de commande 44 et la partie de verrouillage axial 46.

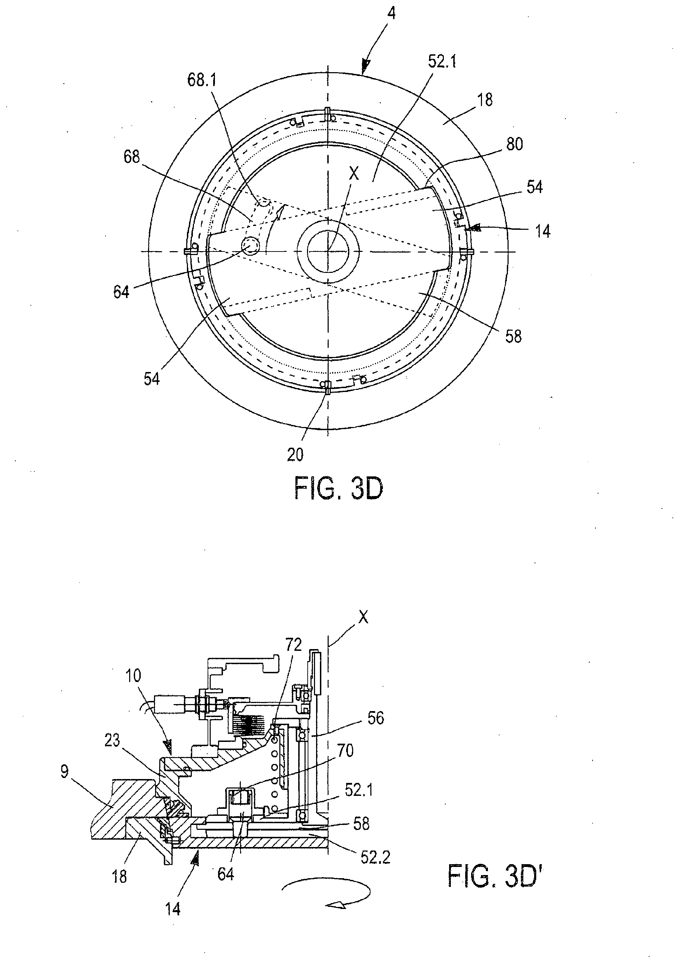

Le capteur 84 détecte la position basse de l'élément mâle 34. L'étape suivante peut démarrer. Le moteur est à nouveau actionné, provoquant la rotation de l'arbre 56 et l'étrier uniquement dans le sens horaire, puisque les pions 66 en position haute n'assurent plus le verrouillage en rotation, le pion 64 glisse dans la lumière en arc de cercle. Les extrémités radialement extérieurs de l'étrier se loge alors dans la gorge bordant l'évidement, et assure un verrouillage axial de la porte 10 sur la porte 14. Dans l'exemple représenté, l'étrier pivote dans le sens horaire, par exemple d'un angle de 25°. La longueur de la lumière est choisie de sorte qu'en fin de course de rotation, le pion 64 soit en butée contre l'autre extrémité de la lumière (figures 3D et 3D'). Lors de cette étape la partie de commande 44 reste immobile.

Lors d'une étape suivante, le moteur est à nouveau activé, ce qui entraine l'arbre 56 et l'étrier en rotation dans le sens horaire. Le pion 64 étant en butée contre l'extrémité de la lumière, l'étrier 58 entraîne le pion 64 en rotation, ce qui met en rotation les plateaux 52.1, 52.2. Or ceux-ci étant logés sensiblement sans jeu dans l'empreinte de la porte 10, plus particulièrement les oreilles, la rotation des plateaux 52.1, 52.2 provoque la rotation de la porte 14 dans le sens horaire par rapport à la bride 9 du conteneur et son déverrouillage. Une détection du déverrouillage peut être avantageusement prévue, par exemple par mesure du courant du moteur.

L'angle de rotation est à titre d'exemple de l'ordre 12,5° (figure 3E et 3E').

La porte 14 peut alors être retirée pour libérée l'ouverture du conteneur. Pour cela, la porte 10 de l'enceinte est écartée de sa bride 9 emportant avec elle la porte 10.

Dans l'exemple représenté, le retrait de la porte 10 se fait par une translation vers le haut puis une rotation (3F et 3F').

Le transfert étanche entre l'intérieur de l'enceinte et l'intérieur du conteneur peut avoir lieu, les faces extérieures des portes sont isolées de manière étanches par rapport à l'intérieur du conteneur et de l'enceinte. Par exemple, comme cela est illustré sur la figure 6, le conteneur peut être chargé avec un matériau pulvérulent acheminé par la trémie 6 fixe débouchant dans la paroi supérieure de l'enceinte 2 et par un partie de trémie amovible 86 qui est mise en place après ouverture des portes 10, 14. La partie de trémie amovible est articulée autour d'un axe Z1. Le mécanisme de commande D est articulée autour d'un axe Z2 parallèle à l'axe Z1 et orthogonal à l'axe X. Cette partie de trémie amovible 86 achemine avantageusement le matériau pulvérulent jusqu'à l'intérieur du conteneur, limitant la dispersion du matériau dans l'enceinte. Dans l'exemple représenté, la trémie 6 comporte une partie coulissante 6.1 accoster la partie de trémie amovible lorsqu'elle est en place au dessus du conteneur 4.

La remise en place des portes s'effectue de manière inverse, celle-ci est expliquée brièvement ci-dessous.

Les portes 10 et 14 sont remises en place dans leur bride respective.

Le moteur est activé de sorte à provoquer la rotation de l'arbre 43 dans le sens antihoraire. Le pivotement l'étrier 58 seul le libère et l'aligne avec les découpes de l'évidement. La porte 14 n'est pas encore verrouillée sur la bride 18.

Le moteur est ensuite à nouveau actionné et provoque la rotation dans le sens antihoraire l'étrier 58 qui entraîne les plateaux 52.1, 52.2 via le pion 64 qui est en butée. La porte 14 est alors à nouveau verrouillée sur la bride 18 du conteneur.

Le conteneur peut alors être désengagé. Une détection de la fermeture de la porte 10 peut être prévue, avant le désengagement du conteneur.

Dans l'exemple représenté, la mise en place des oreilles des plateaux dans l'empreinte de la porte du conteneur et le déverrouillage de la porte 14 s'effectuent dans le même sens de rotation. De manière avantageuse, on prévoit d'effectuer ces deux étapes dans des sens contraire ce qui permet d'éviter tout risque de déverrouiller de manière intempestive le couvercle du conteneur lors de la mise en place des oreilles

Dans l'exemple représenté, la porte 10 de l'enceinte se situe dans une paroi inférieure de l'enceinte, mais elle pourrait se situer sur une paroi supérieure ou sur une paroi latérale.

Les valeurs d'angle de rotation sont données uniquement à titre d'exemple. Celles-ci sont déterminées en fonction du dimensionnement de la porte du conteneur et du nombre d'oreilles. De préférence celles-ci sont choisies les plus faibles possibles pour réduire les frottements et limiter les risques de génération de particules.

En outre des moyens de détection des différentes manoeuvres peuvent être prévus afin d'augmenter encore la sécurité et, en particulier, dans le cas où les portes ne sont pas visibles.

Le moteur est dans l'exemple représenté disposé dans l'enceinte, mais on peut prévoir de le déplacer à l'extérieur de l'enceinte par exemple au moyen de renvois d'angle adaptés.

Le mécanisme de commande selon l'invention permet de ne pas nécessiter d'orientation du conteneur, ce qui est particulièrement intéressant dans le cas de conteneur de taille importante. En outre, il facilite la mise en place d'une connexion étanche automatisée, l'absence d'orientation du conteneur simplifiant l'installation.

L'activation du moteur peut se faire par une commande au moyen d'un ou plusieurs boutons, par exemple un bouton pour chaque étape. Ou alors, le moteur peut être activé séquentiellement au moyen d'un automate programmable programmé à cet effet.

Dans l'exemple représenté un seul moteur est utilisé pour mettre en rotation la partie de commande et la partie de verrouillage axial, ce qui permet de réduire l'encombrement. Cependant on pourrait envisager un moteur ou un moyen d'entraînement en rotation dédié à chacun des parties, dans ce mode de réalisation, les moyens d'immobilisation formés par le pion entre les deux parties ne seraient plus requis.

Sur la figure 5, one peut voir un exemple de réalisation dans lequel l'actionnement du dispositif est réalisé de manière manuelle. Par exemple, un levier 38' est monté en lieu et place du moteur électrique mobile en rotation autour d'un axe Y perpendiculaire à l'axe longitudinal X. La structure du mécanisme de commande est sinon similaire à celle décrite ci-dessus en relation avec les figures 1 à 3F'. On pourrait envisager un levier mobile en rotation directement autour de l'axe X évitant un renvoi d'angle. Ce dispositif peut par exemple être mis en place dans une boîte à gant, dans laquelle le levier est facilement accessible à un opérateur. Par exemple une commande manuelle est particulièrement intéressante dans le cas où des dispositifs électriques ne sont pas souhaités, par exemple pour des risques d'inflammation. De préférence, la porte 10 est montée articulée en rotation sur l'enceinte. Des moyens de maintien en position plaquée de la bride contre la porte sont prévus. Une commande manuelle est particulièrement adaptée lors d'un montage à la verticale.

Dans ce mode de réalisation à commande manuelle, des moyens de détection de la présence de la porte du conteneur et de son état verrouillé ou non et de sécurité mécaniques sont prévus afin d'éviter toute possibilité de pivotement du levier en cas d'absence du conteneur. Ces moyens peuvent être formés par des pions qui en l'absence de la porte 14 sont en saillie et verrouillent le levier et en présence de la porte sont enfoncés et le levier est déverrouillé. Ces moyens sont bien connus de l'homme du métier et ne seront pas décrits en détail.

## Revendications

1. Mécanisme de commande (D) d'un dispositif de connexion étanche entre un premier (2) et un deuxième (4) volume clos, le premier volume (2) comportant une première bride (9) délimitant une première ouverture et une première porte (10) obturant ladite première ouverture, le deuxième volume (4) comportant une deuxième bride (18) délimitant une deuxième ouverture et une deuxième porte (14) obturant ladite deuxième ouverture, la deuxième porte (14) étant solidarisée à la deuxième bride (18) par une liaison baïonnette, la première porte (10) comportant une pièce annulaire (23) assurant le contact étanche avec la première bride (9) et avec la deuxième porte (14) et une enveloppe, l'enveloppe et la pièce annulaire (23) délimitant avec la deuxième porte (14) un espace étanche, ledit mécanisme de commande (D) étant monté dans la pièce annulaire (23), ledit mécanisme de commande (D) comportant un élément mâle (34) destiné à coopérer avec un élément femelle porté par la deuxième porte (14) par une liaison baïonnette, ledit mécanisme de commande (D) comportant des moyens d'entraînement en rotation (38) dudit élément mâle (34), ledit élément mâle (34) étant mobile en translation le long de l'axe longitudinal (X) et en rotation autour de l'axe longitudinal (X) par rapport à la pièce annulaire (23), **caractérisé en ce que** la connexion entre les deux volumes est possible selon au moins les phases suivantes :
- une première phase de recherche de la position d'accostage de l'élément mâle (34) sur l'élément femelle, dans laquelle l'élément mâle est mis en rotation par rapport à la pièce annulaire,
- une deuxième phase de translation de l'élément mâle par rapport à la pièce annulaire, lors de laquelle l'élément mâle (34) accoste l'élément femelle,
- une troisième phase de rotation pour assurer le verrouillage axial des deux portes (10, 14),
- une quatrième phase de rotation pour assurer le déverrouillage de la deuxième porte (14) par rapport à la deuxième bride (18).

2. Mécanisme de commande selon la revendication 1, dans lequel l'élément mâle (34) comporte une partie de verrouillage axial (46) et une partie de commande (44), lesdites parties (44, 46) étant mobiles en rotation l'une par rapport à l'autre autour de l'axe longitudinal (X), la partie de verrouillage axial (46) étant destinée au verrouillage axial de la première porte (10) et de la deuxième porte (14) et la partie de commande (44) étant destinée au verrouillage ou déverrouillage du deuxième couvercle (14).

3. Mécanisme de commande selon la revendication 2, dans lequel la partie de verrouillage axial (46) comporte un étrier (58) perpendiculaire à l'axe longitudinal (X) et connecté aux moyens d'entrainement en rotation (38) autour de l'axe longitudinal (X), ledit étrier (58) étant destiné à coopérer avec l'empreinte (76) de la deuxième porte (14) pour assurer le verrouillage axial des première (10) et deuxième (14) portes, et dans lequel la partie de commande (44) comporte un premier plateau (52.1) et un deuxième plateau (52.2) sensiblement circulaires munis d'oreilles (54), lesdits plateaux étant parallèles et espacés l'un de l'autre le long de l'axe longitudinal (X) d'une distance fixe se sorte à ménager un espace dans lequel est disposé apte à pivoter l'étrier (58), lesdites oreilles (54) étant destinées à coopérer avec des découpes (80) de l'empreinte (76) de sorte qu'une rotation de la partie de commande (44) entraine en rotation la deuxième porte (14), le premier plateau (52.1) et le deuxième plateau (52.2) étant connectés aux moyens d'entraînement en rotation (38)

4. Mécanisme de commande selon la revendication 3, dans lequel les moyens d'entraînement en rotation (38) sont en prise avec un arbre d'entraînement (56) solidaire de l'étrier (58), lesdits premier (52.1) et deuxième (52.2) plateaux étant fixés sur un arbre creux traversé par l'arbre d'entraînement (56) de la partie de verrouillage (46), et dans lequel le mécanisme de command comporte des moyens de solidarisation (62) en rotation escamotables reliant l'étrier (58) et les premier et deuxième plateaux (52.1, 52.2) de sorte que, lors de la première phase, les premier et deuxième plateaux (52.1, 52.2) et l'étrier (58) soient solidaires en rotation, lors de la troisième phase, l'étrier (58) pivote et les premier et deuxième plateaux (52.1, 52.2) soient immobiles et, lors de la quatrième phase, les premier et deuxième plateaux (52.1, 52.2) et l'étrier (58) soient solidaires en rotation.

5. Mécanisme de commande selon la revendication 4, dans lequel l'arbre d'entrainement (56) solidaire l'étrier (58) est mobile en translation le long de l'axe longitudinal (X) et dans lequel des deuxièmes moyens élastiques (72) sont montés en compression entre le premier plateau (52.1) et une partie fixe du mécanisme de commande de sorte à repousser le premier plateau (52.1) et l'étrier (58) en direction de la deuxième porte (14).

6. Mécanisme de commande la revendication 4 ou 5, dans lequel les moyens de solidarisation en rotation comportent au moins un pion (64) présentant une portion de plus petit diamètre (64.2) et une portion de plus grand diamètre (64.1), monté coulissant à travers les premier (52.1) et deuxième (52.2) plateaux et l'étrier (58), le premier plateau (52.1) présentant un orifice (66) de diamètre apte à recevoir la portion de plus grand diamètre (64.2) et le deuxième plateau (52.2) présentant un orifice (67) de diamètre apte à recevoir la portion de plus petit diamètre (64.1) et inférieur à celui de la portion de plus grand diamètre (64.2), et l'étrier (58) comportant une lumière (68) en forme d'arc de cercle centrée sur l'axe longitudinal (X), la largeur de la lumière (58) étant apte à recevoir la portion de plus petit diamètre (64.1) du pion (64) et étant inférieure au diamètre de la portion de plus grand diamètre (64.2), la lumière (68) comportant une extrémité (68.1) de plus grande largeur apte à recevoir la portion de plus grand diamètre (64.2), et un moyen élastique (70) appliquant un effort sur le pion (66) en direction de la deuxième porte, dans un état de solidarisation le pion (64) traverse les deux orifices (66, 67) des premier (52.1) et deuxième (52.2) plateaux et l'extrémité de plus grande largeur (68.1) de la lumière (68) l'étrier (58).

7. Mécanisme de commande selon l'une des revendications 2 à 6, comportant des moyens de détection (82, 84) d'une position de l'élément mâle en dehors de l'empreinte de la deuxième porte et une position dans l'empreinte de la deuxième porte.

8. Mécanisme de commande selon l'une des revendications 1 à 7, dans lequel la rotation lors de la première phase a un sens opposé à la rotation dans la troisième phase.

9. Mécanisme de commande selon l'une des revendications 1 à 8, dans lequel les moyens d'entraînement (38) sont formés par un moteur électrique ou les moyens d'entraînement sont formés par un levier à actionnement manuel (38').

10. Dispositif de connexion étanche entre deux volumes clos, comportant sur le premier volume (2) une première bride (9) délimitant une première ouverture et une première porte (10) obturant ladite première ouverture, sur le deuxième volume (4) comportant une deuxième bride (18) délimitant une deuxième ouverture et une deuxième porte (14) obturant ladite deuxième ouverture, la deuxième porte (14) étant solidarisée à la deuxième bride (18) par une liaison baïonnette et un mécanisme de commande (D) selon l'une des revendications 1 à 9, la première porte (10) comportant une pièce annulaire (23) assurant le contact étanche avec la première bride (9) et avec la deuxième porte (14) et une enveloppe, l'enveloppe et la pièce annulaire (23) délimitant avec la deuxième porte (14) un espace étanche, ledit mécanisme de commande (D) étant monté dans la pièce annulaire (23), la première porte (10) étant avantageusement articulée sur une paroi du premier volume au moyen d'une charnière

11. Dispositif de connexion selon la revendication 10, comportant des moyens pour appliquer un effort axial sur la première porte en direction de la première bride.

12. Système de transfert de poudre comportant un dispositif de connexion selon la revendication 10 ou 11, dans lequel le premier volume (2) est une enceinte comportant une paroi supérieure traversée de manière étanche par une trémie (6) d'alimentation en matériau en poudre, une paroi inférieure (12) munie de la première bride (9) et de la première porte (10) en position fermée, le deuxième volume (4) étant formée par un conteneur à remplir, muni de la deuxième bride (9) et de la deuxième porte (14) en position fermée, et des moyens pour amener en contact par déplacement le long de l'axe longitudinal les première (9) et deuxième (18) brides et des moyens pour immobiliser axialement la deuxième bride (18) par rapport à la première bride (9), et une portion de trémie amovible (86) disposée dans la cellule (2) et apte à raccorder un extrémité de la trémie (6) débouchant dans la cellule (2) et l'ouverture du conteneur (4).

13. Système de transfert de poudre selon la revendication 12, dans lequel le déplacement de la portion de trémie amovible (86) est obtenu par actionnement d'un moteur électrique et/ou le déplacement des deux portes (10, 14) solidarisées l'une à l'autre est obtenu par actionnement d'un moteur électrique.

14. Procédé de connexion étanche entre un premier est un deuxième volume clos au moyen d'un mécanisme de commande selon l'une des revendications 1 à 9, comportant les étapes:
a) mise en contact de la première et de la deuxième bride
b) mise en rotation de l'élément mâle jusqu'à ce qu'il pénètre par translation dans l'empreinte de la deuxième porte,
c) mise en rotation de l'élément mâle de sorte à verrouiller axialement la première et la deuxième porte,
d) mise en rotation de l'élément mâle de sorte à déverrouiller la deuxième porte de la deuxième bride,
e) retrait de l'ensemble formé par les première et deuxième portes,
le sens de rotation de l'étape b) étant avantageusement opposé à celui de l'étape d).

15. Procédé de connexion selon la revendication 14, dans lequel l'étape b) a lieu lorsque l'étape a) est vérifiée l'étape c) a lieu lorsque l'étape b) est vérifiée, et l'étape d) a lieu lorsque l'étape c) est vérifiée.

## Patentansprüche

1. Steuerungsmechanismus (D) für eine Vorrichtung zur dichten Verbindung zwischen einem ersten (2) und einem zweiten (4) geschlossenen Volumen, wobei das erste Volumen (2) einen ersten Flansch (9) umfasst, der eine erste Öffnung begrenzt, und eine erste Tür (10), die die erste Öffnung verschließt, wobei das zweite Volumen (4) einen zweiten Flansch (18) umfasst, der eine zweite Öffnung begrenzt, und eine zweite Tür (14), die die zweite Öffnung verschließt, wobei die zweite Tür (14) mittels einer Bajonettverbindung mit dem zweitem Flansch (18) verbunden ist, wobei die erste Tür (10) ein ringförmiges Teil (23) umfasst, das den dichten Kontakt mit dem ersten Flansch (9) und mit der zweiten Tür (14) gewährleistet, sowie eine Umhüllung, wobei die Umhüllung und das ringförmige Teil (23) zusammen mit der zweiten Tür (14) einen dichten Raum begrenzen, wobei der Steuerungsmechanismus (D) in dem ringförmigen Teil (23) montiert ist, wobei der Steuerungsmechanismus (D) ein männliches Element (34) umfasst, das dazu ausgelegt ist, mit einem weiblichen Element zusammenzuwirken, welches mittels einer Bajonettverbindung durch die zweite Tür (14) getragen wird, wobei der Steuerungsmechanismus (D) Mittel zum Drehantrieb (38) des männlichen Elements (34) umfasst, wobei das männliche Element (34) translationsbeweglich entlang der Längsachse (X) und drehbeweglich um die Längsachse (X) bezüglich des ringförmigen Teils (23) ist, **dadurch gekennzeichnet, dass** die Verbindung zwischen den zwei Volumina wenigstens gemäß den folgenden Phasen möglich ist:
- eine erste Phase des Suchens der Anstoßposition des männlichen Elements (34) an dem weiblichen Element, in der das männliche Element bezüglich des ringförmigen Teils in Drehung versetzt ist,
- eine zweite Phase der Translation des männlichen Elements bezüglich des ringförmigen Teils, während der das männliche Element (34) an dem weiblichen Element anstößt,
- eine dritte Phase der Drehung, um die axiale Verriegelung der zwei Türen (10,14) sicherzustellen,
- eine vierte Phase der Drehung, um die Entriegelung der zweiten Tür (14) bezüglich des zweiten Flanschs (18) sicherzustellen.

2. Steuerungsmechanismus nach Anspruch 1, bei dem das männliche Element (34) ein Axialverriegelungsteil (46) und ein Steuerungsteil (44) umfasst, wobei die Teile (44, 46) zueinander um die Längsachse (X) drehbeweglich sind, wobei das Axialverriegelungsteil (46) zur Axialverriegelung der ersten Tür (10) und der zweiten Tür (14) ausgelegt ist, und das Steuerungsteil (44) zur Verriegelung oder Entriegelung der zweiten Abdeckung (14) ausgelegt ist.

3. Steuerungsmechanismus nach Anspruch 2, bei dem das Axialverriegelungsteil (46) einen Bügel (58) umfasst, der orthogonal zur Längsachse (X) und mit den Mitteln zum Drehantrieb (38) um die Längsachse (X) herum verbunden ist, wobei der Bügel (58) zum Zusammenwirken mit der Vertiefung (76) der zweiten Tür (14) ausgelegt ist, um die Axialverriegelung der ersten (10) und der zweiten (14) Tür sicherzustellen, und bei dem das Steuerungsteil (44) eine erste Platte (52.1) und eine zweite Platte (52.2) umfasst, die im Wesentlichen kreisförmig und mit Ohren (54) ausgestattet sind, wobei die Platten parallel und voneinander entlang der Längsachse (X) um einen festen Abstand derart beabstandet sind, dass ein Raum bereitgestellt ist, in dem der Bügel (58) schwenkbar angeordnet ist, wobei die Ohren (54) dazu ausgelegt sind, mit Ausschnitten (80) der Vertiefung (76) derart zusammenzuwirken, dass eine Drehung des Steuerungsteils (44) die zweite Tür (14) zur Drehung antreibt, wobei die erste Platte (52.1) und die zweite Platte (52.2) mit den Drehantriebsmitteln (38) verbunden sind.

4. Steuerungsmechanismus nach Anspruch 3, bei dem die Drehantriebsmittel (38) in Eingriff mit einer mit dem Bügel (58) verbundenen Antriebswelle (56) sind, wobei die erste (52.1) und die zweite (52.2) Platte an einer Hohlwelle befestigt sind, die von der Antriebswelle (56) des Verriegelungsteils (46) durchsetzt wird, und bei dem der Steuerungsmechanismus einziehbare Drehverbindungsmittel (62) umfasst, die den Bügel (58) und die erste und die zweite Platte (52.1, 52.2) derart miteinander verbinden, dass während der ersten Phase die erste und die zweite Platte (52.1, 52.2) und der Bügel (58) drehfest verbunden sind, dass während der dritten Phase der Bügel (58) schwenkt und die erste und die zweite Platte (52.1, 52.2) unbeweglich sind, und dass während der vierten Phase die erste und die zweite Platte (52.1, 52.2) und der Bügel (58) drehfest verbunden sind.

5. Steuerungsmechanismus nach Anspruch 4, bei dem die mit dem Bügel (58) verbundene Antriebswelle (56) entlang der Längsachse (X) translationsbeweglich ist, und bei dem zweite elastische Mittel (72) in Kompression zwischen der ersten Platte (52.1) und einem festen Teil des Steuerungsmechanismus derart montiert sind, dass die erste Platte (52.1) und der Bügel (58) in Richtung der zweiten Tür (14) gedrückt werden.

6. Steuerungsmechanismus nach Anspruch 4 oder 5, bei dem die Drehverbindungsmittel wenigstens einen Zapfen (64) umfassen, der einen Bereich mit kleinerem Durchmesser (64.2) und einen Bereich mit größerem Durchmesser (64.1) aufweist und der durch die erste (52.1) und die zweite (52.2) Platte und den Bügel (58) hindurch verschiebbar montiert ist, wobei die erste Platte (52.1) eine Öffnung (66) mit einem Durchmesser aufweist, der geeignet ist, den Bereich mit größerem Durchmesser (64.2) aufzunehmen, und die zweite Platte (52.2) eine Öffnung (67) mit einem Durchmesser aufweist, der geeignet ist, den Bereich mit kleinerem Durchmesser (64.1) aufzunehmen, und der kleiner als jener des Bereichs mit größerem Durchmesser (64.2) ist, und wobei der Bügel (58) einen kreisbogenförmigen Kanal (68) umfasst, der auf der Längsachse (X) zentriert ist, wobei die Breite des Kanals (68) dazu ausgelegt ist, den Bereich mit kleinerem Durchmesser (64.1) des Zapfens (64) aufzunehmen und kleiner als der Durchmesser des Bereichs mit größerem Durchmesser (64.2) ist, wobei der Kanal (68) ein Ende (68.1) mit größerer Breite umfasst, das geeignet ist, den Bereich mit größerem Durchmesser (64.2) aufzunehmen, und wobei ein elastisches Mittel (70) eine Kraft auf den Zapfen (64) in Richtung der zweiten Tür ausübt, wobei in einem Verbindungszustand der Zapfen (64) die zwei Öffnungen (66, 67) der ersten (52.1) und der zweiten (52.2) Platte und das Ende mit größerer Breite (68.1) des Kanals (68) des Bügels (58) durchsetzt.

7. Steuerungsmechanismus nach einem der Ansprüche 2 bis 6, umfassend Mittel (82, 84) zur Erfassung einer Position des männlichen Elements außerhalb der Vertiefung der zweiten Tür und einer Position in der Vertiefung der zweiten Tür.

8. Steuerungsmechanismus nach einem der Ansprüche 1 bis 7, bei dem die Drehung während der ersten Phase eine Richtung entgegengesetzt zur Drehung in der dritten Phase hat.

9. Steuerungsmechanismus nach einem der Ansprüche 1 bis 8, bei dem die Antriebsmittel (38) durch einen Elektromotor gebildet sind, oder bei dem die Antriebsmittel durch einen Hebel mit manueller Betätigung (38') gebildet sind.

10. Vorrichtung zur dichten Verbindung zwischen zwei geschlossenen Volumina, umfassend an dem ersten Volumen (2) einen ersten Flansch (9), der eine erste Öffnung begrenzt, und eine erste Tür (10), die die erste Öffnung verschließt, ferner umfassend an dem zweiten Volumen (4) einen zweiten Flansch (18), der eine zweite Öffnung begrenzt, und eine zweite Tür (14), die die zweite Öffnung verschließt, wobei die zweite Tür (14) mit dem zweiten Flansch (18) mittels einer Bajonettverbindung verbunden ist, und umfassend einen Steuerungsmechanismus (D) nach einem der Ansprüche 1 bis 9, wobei die erste Tür (10) ein ringförmiges Teil (23) umfasst, das den dichten Kontakt mit dem erstem Flansch (9) und mit der zweiten Tür (14) sicherstellt, sowie eine Umhüllung, wobei die Umhüllung und das ringförmige Teil (23) zusammen mit der zweiten Tür (14) einen dichten Raum begrenzen, wobei der Steuerungsmechanismus (D) in dem ringförmigen Teil (23) montiert ist, wobei die erste Tür (10) vorzugsweise mit Hilfe eines Scharniers an einer Wand des ersten Volumens angelenkt ist.

11. Verbindungsvorrichtung nach Anspruch 10, umfassend Mittel zum Ausüben einer Axialkraft auf die erste Tür in Richtung des ersten Flanschs.

12. Pulvertransfersystem, umfassend eine Verbindungsvorrichtung nach Anspruch 10 oder 11, bei dem das erste Volumen (2) ein Gehäuse ist, das eine obere Wand umfasst, die in dichter Weise von einem Trichter (6) zur Versorgung mit Pulvermaterial durchsetzt wird, eine untere Wand (12), die mit dem ersten Flansch (9) und der ersten Tür (10) in geschlossener Position ausgestattet ist, wobei das zweite Volumen (4) durch einen zu füllenden Behälter gebildet ist, der mit dem zweiten Flansch (9) und mit der zweiten Tür (14) in geschlossener Position ausgestattet ist, und Mittel zum Inkontaktbringen des ersten (9) und des zweiten (18) Flanschs durch Verlagerung entlang der Längsachse und Mittel zum axialen Immobilisieren des zweiten Flanschs (18) bezüglich des ersten Flanschs (9), sowie einen abnehmbaren Trichterbereich (86), der in der Zelle (2) angeordnet und dazu ausgelegt ist, ein in die Zelle (2) mündendes Ende des Trichters (6) und die Öffnung des Behälters (4) miteinander zu verbinden.

13. Pulvertransfersystem nach Anspruch 12, bei dem die Verlagerung des abnehmbaren Trichterbereichs (86) erzielt wird durch Betätigung eines Elektromotors, und/oder wobei die Verlagerung der zwei miteinander verbundenen Türen (10, 14) erzielt wird durch Betätigung eines Elektromotors.

14. Verfahren zur dichten Verbindung zwischen einem ersten und einem zweiten geschlossenen Volumen mit Hilfe eines Steuerungsmechanismus nach einem der Ansprüche 1 bis 9, umfassend die folgenden Schritte:
a) Inkontaktbringen des ersten und des zweiten Flanschs
b) Indrehungversetzen des männlichen Elements, bis es durch Translation in die Vertiefung der zweiten Tür eindringt,
c) Indrehungversetzen des männlichen Elements derart, dass die erste und die zweite Tür axial verriegelt werden,
d) Indrehungversetzen des männlichen Elements derart, dass die zweite Tür des zweiten Flanschs entriegelt wird,
e) Zurückziehen der durch die erste und durch die zweite Tür gebildeten Gesamtanordnung,
wobei die Drehrichtung des Schritts b) vorzugsweise entgegengesetzt zu jener des Schritts d) ist.

15. Verbindungsverfahren nach Anspruch 14, bei dem der Schritt b) erfolgt, wenn der Schritt a) bestätigt ist, der Schritt c) erfolgt, wenn der Schritt b) bestätigt ist, und der Schritt d) erfolgt, wenn der Schritt c) bestätigt ist.

## Claims

1. Mechanism for controlling (D) a device for sealingly connecting a first (2) and a second (4) enclosed space, with the first space (2) comprising a first flange (9) delimiting a first opening and a first door (10) closing off said first opening, with the second space (4) comprising a second flange (18) delimiting a second opening and a second door (14) closing off said second opening, the second door (14) being secured to the second flange (18) via a bayonet connection, with the first door (10) comprising an annular part (23) providing the sealed contact with the first flange (9) and with the second door (14) and a casing, with the casing and the annular part (23) delimiting with the second door (14) a sealed space, said control mechanism (D) mounted in the annular part (23), said control mechanism (D) comprising a male element (34) intended to cooperate with a female element carried by the second door (14) via a bayonet connection, said control mechanism (D) comprising means for driving in rotation (38) said male element (34), said male element (34) being translatably movable along the longitudinal axis (X) and rotatably movable about the longitudinal axis (X) in relation to the annular part (23), **characterized in that** the connection between the two spaces is possible according to at least the following phases:
- a first phase of rotation for searching for the docking position of the male element (34) on the female element, in which the male element is rotated in relation to the annular part,
- a second phase of translation during which the male element (34) docks with the female element, wherein the male element (34) comes into contact with the female element,
- a third phase of rotation in order to provide the axial locking of the two doors (10, 14),
- a fourth phase of rotation in order to provide the unlocking of the second door (14) in relation to the second flange (18).

2. Control mechanism according to claim 1, wherein the male element (34) comprises an axial locking portion (46) and a control portion (44), with said portions (44, 46) being rotatably movable in relation to one another about the longitudinal axis (X), with the axial locking portion (46) configured for the axial locking of the first door (10) and of the second door (14) and the control portion (44) configured for the locking or unlocking of the second cover (14).

3. Control mechanism according to claim 2, wherein the axial locking portion (46) comprises a bracket (58) perpendicular to the longitudinal axis (X) and connected to the means for driving in rotation (38) about the longitudinal axis (X), said bracket (58) configured to cooperate with the recess (76) of the second door (14) in order to provide the axial locking of the first (10) and second (14) doors, and wherein the control portion (44) comprises a substantially circular first plate (52.1) and second plate (52.2) provided with lugs (54), said plates being parallel and spaced apart from one another along the longitudinal axis (X) by a fixed distance in such a way as to arrange a space wherein is arranged able to pivot the bracket (58), said lugs (54) being configured to cooperate with cut-outs (80) of the recess (76) in such a way that a rotation of the control portion (44) drives in rotation the second door (14), with the first plate (52.1) and the second plate (52.2) being connected to the means for driving in rotation (38)

4. Control mechanism according to claim 3, wherein the means for driving in rotation (38) are engaged with a drive shaft (56) attached to the bracket (58), said first (52.1) and second (52.2) plates being fixed on a hollow shaft through which passes the drive shaft (56) of the locking portion (46), and wherein the control mechanism comprises retractable means for securing (62) in rotation connecting the bracket (58) and the first and second plates (52.1, 52.2) in such a way that, during the first phase, the first and second plates (52.1, 52.2) and the bracket (58) are secured in rotation, during the third phase, the bracket (58) pivots and the first and second plates (52.1, 52.2) are immobile and, during the fourth phase, the first and second plates (52.1, 52.2) and the bracket (58) are secured in rotation.

5. Control mechanism according to claim 4, wherein the drive shaft (56) attached to the bracket (58) is translatably movable along the longitudinal axis (X) and wherein second elastic means (72) are mounted in compression between the first plate (52.1) and a fixed portion of the control mechanism in such a way as to push the first plate (52.1) and the bracket (58) in the direction of the second door (14).

6. Control mechanism according to claim 4 or 5, wherein the means for securing in rotation comprise at least one pin (64) having a portion of smaller diameter (64.2) and a portion of larger diameter (64.1), mounted slidingly through the first (52.1) and second (52.2) plates and the bracket (58), with the first plate (52.1) having an orifice (66) with a diameter able to receive the portion of larger diameter (64.2) and the second plate (52.2) having an orifice (67) with a diameter able to receive the portion of smaller (64.1) and less than that of the portion of larger diameter (64.2), and the bracket (58) comprising a slot (68) in the shape of an arc of circle centred on the longitudinal axis (X), with the width of the slot (58) able to receive the portion of smaller diameter (64.1) of the pin (64) and being less than the diameter of the portion of larger diameter (64.2), with the slot (68) comprising an end (68.1) of greater width able to receive the portion of larger diameter (64.2), and an elastic means (70) applying a force on the pin (66) in the direction of the second door, in an attached state the pin (64) passes through the two orifices (66, 67) of the first (52.1) and second (52.2) plates and the end of greater width (68.1) of the slot (68) the bracket (58).

7. Control mechanism according to one of claims 2 to 6, comprising means for detecting (82, 84) a position of the male element outside of the recess of the second door and a position in the recess of the second door.

8. Control mechanism according to one of claims 1 to 7, wherein the rotation during the first has a direction opposite the rotation in the third phase.

9. Control mechanism according to one of claims 1 to 8, wherein the means of driving (38) are formed by an electric motor or the means for driving are formed by a manually actuated lever (38').

10. Device for sealingly connecting two enclosed areas, comprising on the first space (2) a first flange (9) delimiting a first opening and a first door (10) closing off said first opening, on the second space (4) comprising a second flange (18) delimiting a second opening and a second door (14) closing off said second opening, the second door (14) being secured to the second flange (18) via a bayonet connection and a control mechanism (D) according to one of claims 1 to 9, with the first door (10) comprising an annular part (23) providing the sealed contact with the first flange (9) and with the second door (14) and a casing, with the casing and the annular part (23) delimiting with the second door (14) a sealed space, said control mechanism (D) mounted in the annular part (23), the first door (10) being advantageously articulated on a wall of the first space by means of a hinge.

11. Device for connecting according to claim 10, comprising means for applying an axial force on the first door in the direction of the first flange.

12. System for transferring powder comprising a device for connecting according to claim 10 or 11, wherein the first space (2) is an enclosure comprising an upper wall sealingly passed through by a hopper (6) for supplying a powder material, a lower wall (12) provided with the first flange (9) and the first door (10) in closed position, with the second space (4) formed by a container to be filled, provided with the second flange (9) and the second door (14) in closed position, and means for bringing into contact by displacement along the longitudinal axis the first (9) and second (18) flanges and means for axially immobilising the second flange (18) in relation to the first flange (9), and a movable portion of hopper (86) arranged in the cell (2) and able to connect an end of the hopper (6) opening into the cell (2) and the opening of the container (4).

13. System for transferring powder according to claim 12, wherein the displacement of the movable portion of hopper (86) is obtained by the actuating of an electric motor or/and the displacement of the two doors (10, 14) secured to each other is obtained by the actuating of an electric motor.

14. Method for sealingly connecting a first and a second enclosed space by means of a control mechanism according to one of claims 1 to 9, comprising the steps:
a) putting into contact the first flange and the second flange
b) putting into rotation of the male element until it penetrates by translation into the recess of the second door,
c) putting into rotation of the male element in such a way as to axially lock the first and the second door,
d) putting into rotation of the male element in such a way as to unlock the second door of the second flange,
e) withdrawing the unit formed by the first and second doors,
the direction of rotation of the step b) being advantageously opposite that of the step d).

15. Method for connecting according to claim 14, wherein the step b) takes place when the step a) is verified, the step c) takes place when the step b) is verified, and the step d) takes place when the step c) is verified.
